# EUROPÄISCHE PATENTSCHRIFT

(11) **EP 1 924 392 B1**
(45) Veröffentlichungstag und Bekanntmachung des Hinweises auf die Patenterteilung: **08.09.2010**
(21) Anmeldenummer: 06761820.7
(22) Anmeldetag: 14.07.2006
(51) Int. Cl.: B23K 26/40, B23K 26/14, B26F 3/06, C03B 33/09, B23K 101/40

(54) **VERFAHREN ZUM DURCHTRENNEN VON SPRÖDEN FLACHMATERIALIEN MITTELS LASER ENTLANG EINER ZUVOR ERZEUGTEN SPUR**
METHOD FOR SEVERING BRITTLE FLAT MATERIALS BY LASER BEAM, WITH TRACES PRODUCED PRIOR TO SEPARATION
PROCEDE DE SEPARATION DE MATERIAUX PLATS CASSANTS A L'AIDE DU LASER LE LONG D'UNE TRACE PREALABLEMENT PRODUITE

(30) Priorität: 06.08.2005 DE 102005038027
(43) Veröffentlichungstag der Anmeldung: 28.05.2008
(73) Patentinhaber: JENOPTIK Automatisierungstechnik GmbH, 07745 Jena (DE)
(72) Erfinder: EBERHARDT, Gabriele, 07749 Jena (DE); ZÜHLKE, Hans-Ulrich, 07743 Jena (DE); LINKE, Torsten, 07745 Jena (DE)
(74) Vertreter: Schaller, Renate
(86) Internationale Anmeldenummer: PCT/DE2006/001243
(87) Internationale Veröffentlichungsnummer: WO 2007/016895

(56) Entgegenhaltungen:
- WO-A-93/20015
- JP-A- 5 032 428
- JP-A- 2001 151 525
- JP-A- 2003 002 676
- US-A1- 2002 170 896
- US-A1- 2003 201 261
- US-B1- 6 664 503

## Beschreibung

Diese Anmeldung betrifft ein Verfahren zum Durchtrennen von spröden Flachmaterialien mittels Laser entlang einer zuvor erzeugten Spur gemäß dem Oberbegriff des Anspruchs 1 (siehe, z.B., JP 2001/151 525).

Es ist bekannt, Flachmaterialien aus einem spröden Werkstoff wie zum Beispiel Glas, Saphir, Silizium, Gallium Arsenid oder Keramik zu durchtrennen, indem entlang der gewünschten Trennlinie eine Kerbe erzeugt wird, entlang der anschließend durch die Beaufschlagung mit mechanischen Kräften Bruchspannungen erzeugt werden, die zur vollständigen Durchtrennung des Flachmaterials führen.

Damit das Flachmaterial auf diese Weise getrennt werden kann, muss die Kerbe wenigstens ein Drittel der Flachmaterialdicke tief sein.
Die Kerbe kann mechanisch oder auch mittels Laser eingebracht werden. Insbesondere zum Vereinzeln (Dicing) von Chips aus Substraten (Wafern), werden zunehmend Laserverfahren eingesetzt, die durch Ablation eine Kerbe in das Material einbringen. Üblicherweise werden die Kerben nur wenige µm breit und ca. 1/3 der Flachmaterialdicke tief erzeugt. Die Kerbtiefe wird dabei anteilig zur Gesamtdicke des Flachmaterials und abhängig von dessen Sprödheit generiert. Nachteilig ist, dass jedes abgetragene Volumen potenziell zur mikroskopischen Verschmutzung des bearbeiteten Materials beiträgt. Da für alle diese Laserverfahren das Aspektverhältnis zwischen Kerbbreite und Kerbtiefe kritisch ist, werden aufwendige Vorrichtungen benötigt und das Einbringen der Kerbe erfolgt relativ langsam. Tiefe Kerben für dicke Wafer benötigen deshalb zunehmend mehr Prozesszeit.

Solche Verfahren sind z.B. in der US 2005153525 oder der US 2004228004 offenbart. Nach Einbringung der Kerben wird der Wafer durch das Aufbringen mechanischer (Impuls-) Energie oder Kräfte, zum Beispiel Zugkräfte (Stretchen von Folien), Biegekräfte (Brechen über Kalotten) oder deren Kombination vollständig getrennt.

Das mechanische Einbringen von Bruchkräften erfolgt geometrisch relativ unpräzise. Es können deshalb Bruchfehler auftreten, indem z.B. die Bruchlinien nicht senkrecht durch die Materialdicke verlaufen oder zwei in einem Punkt zusammentreffende Bruchlinien treffen nicht im vorgesehenen Winkel aufeinander. Solche Bruchfehler führen insbesondere bei der Chipherstellung zur Verminderung der Gutausbeute und müssen daher vermieden werden. Außerdem kann es zum Absplittern von Materialpartikeln kommen, die eine makroskopische Verschmutzung der Oberfläche des Flachmaterials zur Folge haben können.

Anstelle ein Flachmaterial durch Materialabtrag zu trennen, z.B. in Form einer Kerbe, wie beschrieben, ist es bekannt, einen mechanischen verursachten Initialriss zu erzeugen, der anschließend mittels thermisch induzierter mechanischer Spannungen durch das Flachmaterial getrieben wird.
In der WO 93 20015 ist ein solches Verfahren (Thermisches Laser Separieren- TLS) beschrieben. Es ist insbesondere dann von Nachteil, wenn ein in mehrere parallele Streifen aufgetrenntes Flachmaterial in einer zweiten Richtung, zum Beispiel orthogonal, zur ersten Trennrichtung, d.h. zum Beispiel in einzelne Rechtecke, aufgetrennt werden soll, z.B. beim Auftrennen eines Wafers in einzelne Chips. Da am Anfang einer jeden Trennlinie der ersten Trennrichtung, ein erneuter Initialriss gesetzt werden muss, ist das Verfahren sehr zeitaufwendig und das mechanische Ritzsystem unterliegt hohem Verschleiß.

Es sind auch Verfahren bekannt, bei denen eine gewünschte Ritzlinie, bevor sie durch das Einbringen von thermischen Spannungen mittels Laser getrennt wird, über ihre gesamte Länge vorgeritzt wird.
Z.B. ist es aus der JP 2001 151525 A bekannt, mit einem mechanischen Glasschneider eine Ritzlinie in die Oberfläche einer Glasplatte einzubringen, entlang derer dann beidseitig der entstandenen Ritzlinie in synchroner Geschwindigkeit mit dem Glasschneider das Glasmaterial durch Laserstrahlung beaufschlagt wird, wodurch die Ritzlinie in die Tiefe getrieben wird.
Gemäß der US 2003/201261 A1 erfolgt das Vorritzen ebenfalls mit einem Laser.

Auch aus der JP 2003 002676 A ist ein Verfahren bekannt, bei dem ein Trennriss mittels Laser entlang einer zuvor mechanisch eingebrachten Ritzlinie erfolgt.

Es ist die Aufgabe der Erfindung ein Verfahren zu finden, mit dem Flachmaterialien aus einem spröden Werkstoff in eine Vielzahl von Einzelteilen, insbesondere Wafer in Chips vereinzelt werden können, mit guter Zeiteffizienz und hoher Kantenqualität.

Diese Aufgabe wird mit einem Verfahren gemäß Anspruch 1 erfüllt.

Vorteilhafte Ausführungen sind in dem Unteranspruche 2 beschrieben.

Ein Ausführungsbeispiel soll anhand der Zeichnung erläutert werden. Hierzu zeigt:
- Fig. 1: einen Wafer in Draufsicht.
- Fig. 2: einen Wafer gemäß Fig. 1 in Seitenansicht nach Einbringen der Spuren, hier Kerben
- Fig. 3: einen Wafer gemäß Fig. 1 in Seitenansicht nach Erzeugung der Trennrisse.

Die Erfindung soll nachfolgend anhand der Vereinzelung eines Wafers erläutert werden, ist jedoch nicht darauf beschränkt, sondern vielmehr zur Trennung jeglichen Flachmaterials aus einem spröden Werkstoff anwendbar.

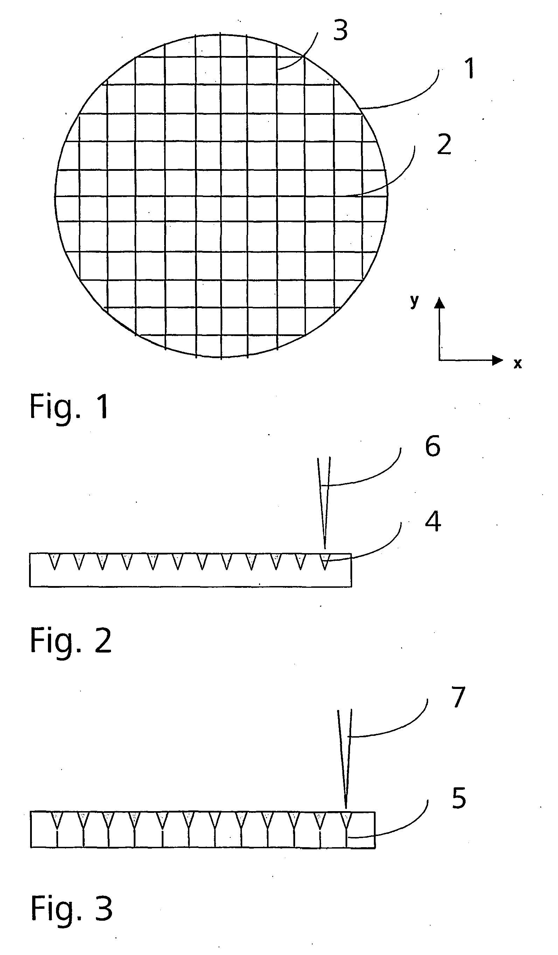

Bei dem in Fig. 1 dargestellten Wafer 1 sind die vorgesehenen Trennlinien, bestehend aus einer Vielzahl von x-Trennlinien 2 (Trennlinien die in X-Richtung verlaufen) und einer Vielzahl von y-Trennlinien 3 (Trennlinien in Y-Richtung), dargestellt.
Zum Vereinzeln des Wafers (hier Saphirwafer) werden zunächst Spuren entlang der x-Trennlinien 2 und dann entlang der Y-Trennlinien 3 erzeugt.

Die Spuren können entweder durch einen Materialabtrag oder durch eine Materialmodifikation, d.h. gemäß der Erfindung, in das Flachmaterial eingebracht werden.
In jedem Fall wird durch die Spuren die kritische Bruchspannung des Materials entlang der Spuren gegenüber dem unbearbeiteten Material herabgesetzt.
Im Falle des Materialabtrages kommt hinzu, dass die zu trennende Materialdicke entsprechend der Kerbentiefe reduziert wird.

Das Verfahren ist auch anwendbar, wenn die Spannungsverhältnisse im Flachmaterial über die Trennlinie hin verschieden sind oder die Materialdicke verschieden ist. Damit die Trennrisse das Material unabhängig von solchen örtlichen Verschiedenheiten immer sicher zur Materialtrennung führen, können die Kerben bzw. Materialmodifikationen in ihrer Geometrie und insbesondere in ihrer Tiefe über die Trennlinie örtlich verändert werden.

Das Einbringen der Spur kann unmittelbar vor dem eigentlichen Trennprozess erfolgen oder aber auch vor oder zwischen anderen Beärbeitungsvorgängen am Wafer.

In einem ersten Beispiel, das nicht Gegenstand der Erfindung darstellt, werden die Spuren durch Materialabtrag mittels einer ersten Laserstrahlung 6 erzeugt (Fig. 2). Hierzu wird eine auf die Waferoberfläche gerichtete Laserstrahlung 6, z.B. eines UV-Lasers, relativ zum Wafer 1 in der jeweiligen Trennrichtung geführt. Die entstehenden Kerben 4 haben eine Breite von 2-5 µm und eine Tiefe von 3-10 µm. Die Schnittgeschwindigkeit liegt im Bereich von 50 bis 70 mm/s. Bei einer Chipgröße von 320 x 320 µm² befinden sich auf einem 2"-Wafer ca. 300 solcher Trennlinien, 150 x-Trennlinien und 150 y-Trennlinien. Die Tiefe der Kerben kann deutlich geringer gewählt werden als bei Verfahren gemäß dem Stand der Technik, z.B. kleiner 1/10 der Materialdicke. Gegenüber einem mechanischen Vorritzen, wie es gemäß der WO 93 20015 beim TSL-Verfahren vorgeschlagen wird, ist die Verfahrensgeschwindigkeit deutlich höher.
Nach der Erzeugung aller Kerben 4 entlang der x- und y-Trennlinien, werden in den Kerben 4 thermisch induzierte mechanische Spannungsdifferenzen erzeugt, die von den Spitzen der Kerben ausgehend, das Flachmaterial durchtrennende Trennrisse 5 bewirkt. Diese Spannungsdifferenz wird induziert, indem eine zweite Laserstrahlung 7, z.B. die eines CO₂-Lasers über die Kerben 4 geführt wird (Fig.3) (thermisch induzierte Druckspannung), der ein Kühlmittelstrahl, zum Beispiel mit einem Wasser-Luftgemisch (Aerosol) oder einem gekühlten Gas folgt (thermisch induzierte Zugspannung). Dieser Vorgang passiert mit einer Relativgeschwindigkeit zum Material von 300 bis 400 mm/s.

Die Auswahl der Laser für die erste und zweite Laserstrahlung 6 und 7 sowie deren Prozessparameter, erfolgt materialabhängig. Während der Laser für die erste Laserstrahlung 6 und die hierbei wirkenden Verfahrensparameter (insbesondere Laserleistung, Pulsregime und die Geschwindigkeit der Relativbewegung) so ausgewählt wird, dass das Material im beaufschlagten Bereich zum Beispiel durch Schmelzen oder Verdampfen entfernt und ausgetrieben wird, ist der Laser für die zweite Laserstrahlung 7 und die hier wirkenden Verfahrensparameter so gewählt, dass das Material nur unterhalb aller kritischen Zerstörungsschwellen erwärmt wird. Es können sowohl unterschiedliche Laser als auch derselbe Laser verwendet werden. Die unterschiedliche Erwärmung kann bewirkt werden, indem Laser mit unterschiedlichen Wellenlängen verwendet werden, die vom Material unterschiedlich absorbiert werden. Oder aber durch die Modulation der zeitlichen oder räumlichen Energieverteilung, zum Beispiel durch Änderung der Strahlgeometrie, der Strahlungsdichteverteilung im Strahlungsfleck oder auch eine Variation der Laserleistung oder ein Pulsregime.
Gegenüber bekannten Verfahren, bei denen eine Kerbe mittels Laser erzeugt wird und das Material anschließend mechanisch gebrochen wird, wird die thermische Belastung geringer gehalten, da die Kerben 4 wesentlich flacher gehalten werden können bzw. weniger Volumenabtrag erfolgt, wenn der Trennriss anschließend durch thermisch induzierte mechanische Spannungen bewirkt wird. Darüber hinaus sind die entstehenden Trennkanten glatter und Bruchfehler werden minimiert. Die drastisch reduzierte Kerbtiefe hat eine deutlich verringerte Partikelfreisetzung zur Folge.
Das Kerben mit dem Laser ist insbesondere immer dann von Vorteil, wenn die Kerbe nicht in anderen Produktionsschritten mit vorhandenen Mitteln erzeugt werden kann.

In einem zweiten Beispiel, das nicht Gegenstand der Erfindung darstellt, sollen die Spuren ebenfalls Kerben sein, die durch ein Ätzverfahren, wie es bei Front-End-Prozessen in der Halbleiterindustrie üblich ist, hergestellt werden, zum Beispiel durch nasschemisches Ätzen oder Plasmaätzen. Weil in Vorbereitung des TLS-Prozesses wieder nur eine minimale Kerbtiefe von wenigen µm erforderlich ist, besteht auch nicht die Gefahr der vorzeitigen Zerstörung des Wafers, bei den zwischendurch erforderlichen Handlings- und Prozessschritten. Die Geometrie der Kerben 4 unterscheidet sich von den durch Laser 6 erzeugten, durch wesentlich steilere Flanken der Kerbe und daraus folgend einer breiteren Spitze der Kerbe. Bei einer gewünschten Kerbtiefe von 5 - 10 µm beträgt die Breite der Kerbe 2 - 3.5 µm. Das Brechen des Flachmaterials mit derart erzeugten Kerben erfolgt dann analog Beispiel 1 mit dem Laser 7.

Grundsätzlich ist die Art der Herstellung der Kerbe nicht entscheidend, sondern vielmehr die Tatsache, dass eine solche Kerbe entlang einer Trennlinie eingebracht wird, um von den Spitzen der Kerben ausgehend, einen Riss durch das Flachmaterial zu treiben. Das Ausführungsbeispiel gemäß der Erfindung unterscheidet sich gegenüber den bisher aufgezeigten Beispielen dadurch, dass die Spur nicht durch einen Materialabtrag in Form einer Kerbe 4, sondern durch eine Materialmodifikation entlang der Trennlinie erzeugt wird. So kann z.B. durch Energieeintrag das Materialgefüge verändert werden oder durch Ionenimplantation das Material örtlich gezielt dotiert werden, um die Materialeigenschaften so zu verändern, dass die kritische Bruchspannung entlang der Spur verringert wird.

## Patentansprüche

1. Verfahren zum Durchtrennen von spröden Flachmaterialien (1) z.B. aus Glas, Keramik, Silizium, Gallium Arsenid oder Saphir, bei dem mittels Laser (6,7) das Flachmaterial (1) entlang gewünschter Trennlinien (2,3) unterhalb der Schmelztemperatur erwärmt wird und durch einen nachgeführten Kühlmittelstrahl (7) abgeschreckt wird, sodass eine thermisch induzierte mechanische Spannungsdifferenz eine Materialdurchtrennung bewirkt, wobei im Voraus entlang der Trennlinien (2,3) Spuren in das Flachmaterial (1) eingearbeitet werden, sodass das Flachmaterial (1) entlang der Spuren eine gegenüber dem unbearbeiteten Flachmaterial geringere Bruchspannung aufweist und das Trennen mit dem Laser (6,7) entlang dieser Spuren erfolgt, **dadurch gekennzeichnet,**
**dass** die Spur durch eine Materialmodifikation hergestellt wird, wodurch die kritische Bruchspannung entlang der Spur verringert wird.

2. Verfahren nach Anspruch 1, **dadurch gekennzeichnet,**
**dass** die Geometrie und insbesondere die Tiefe der Spur über die Trennlinie (2,3) örtlich variiert wird, um Spannungsunterschiede und Materialdickenunterschiede im Flachmaterial (1) entlang der Trennlinie (2,3) auszugleichen.

## Claims

1. A method for separating brittle flat materials (1), for example made from glass, ceramics, silicon, gallium arsenide or sapphire, in which the flat material (1) is heated below the melting temperature by means of a laser (6, 7) along desired separating lines (2, 3) and is quenched by a following coolant jet (7), so that a thermally induced difference in mechanical stress causes separation of the material, wherein traces are formed in the flat material (1) in advance along the separating lines (2, 3), so that the flat material (1) has a lower breaking stress along the traces than in the unworked flat material, and the separation with the laser (6, 7) takes place along these traces,
**characterised in that**
the trace is formed by a material modification which lowers the critical breaking stress along the trace.

2. Method according to claim 1, **characterised in that** the geometry and in particular the depth of the trace is locally varied along the separation line (2, 3) so as to equalise any differences in tension and material thickness in the flat material (1) along the separation line (2,3).

## Revendications

1. Procédé de séparation de matériaux plats (1) fragiles, fabriqués par exemple en verre, céramique, silicium, arséniure de gallium ou saphir, ce procédé comprenant le chauffage du matériau plat (1) à une température inférieure à sa température de fusion au moyen d'un laser (6, 7) selon des lignes de séparation (2, 3) voulues et la trempe du matériau par un jet d'agent de refroidissement (7) suivant, de sorte qu'une différence de contrainte mécanique thermiquement induite a pour effet la séparation du matériau, ledit procédé comprenant en outre la formation antérieure de traces dans ledit matériau plat (1) selon lesdites lignes de séparation (2, 3), de sorte que le matériau plat (1) présente, selon lesdites traces, une tension de rupture inférieure à celle du matériau plat non travaillé, et la séparation au moyen du laser (6, 7) se fait selon lesdites traces,
**caractérisé en ce que**
la trace est formée par une modification du matériau de manière à abaisser la tension critique de rupture selon ladite trace.

2. Procédé selon la revendication 1, **caractérisé en ce que** la géométrie de la trace, et notamment sa profondeur, est variée localement sur la ligne de séparation (2, 3) de manière à égaliser les différences de contrainte et d'épaisseur dans le matériau plat (1) selon la ligne de séparation (2, 3).
